# EUROPEAN PATENT APPLICATION

(11) **EP 4 844 446 A1**
(43) Date of publication of application: **25.11.2026**
(21) Application number: 24918638.8
(22) Date of filing: 25.10.2024
(51) Int. Cl.: G01S 13/931, A01B 69/00, G01S 13/86, G01S 13/87

(54) **WORK VEHICLE**

(30) Priority: 19.01.2024 JP 2024006466
(71) Applicant: KUBOTA CORPORATION, Osaka-shi, Osaka 530-0011 (JP)
(72) Inventor: TAKAYA Kenta, Sakai-shi, Osaka 590-0908 (JP); TAKEOKA Susumu, Sakai-shi, Osaka 590-0908 (JP); FUKUYAMA Akito, Sakai-shi, Osaka 590-0908 (JP)
(74) Representative: Müller-Boré & Partner Patentanwälte PartG mbB
(86) International application number: PCT/JP2024/038072
(87) International publication number: WO 2025/154351

(57) **Abstract**

Provided is a working vehicle capable of suitably detecting a detection target.

A tractor 1 includes a plurality of radar units 50 capable of detecting a detection target in at least two directions around a vehicle body. The plurality of radar units 50 is disposed at a height of a roof 11 of a cabin of the vehicle body.

## Description

### TECHNICAL FIELD

The present invention relates to a technique of a working vehicle.

### BACKGROUND ART

Conventionally, a technique of a working vehicle capable of detecting a detection target around a vehicle body is known. For example, Patent Literature 1 discloses such a configuration.

Patent Literature 1 describes a working vehicle including a ridge identification unit that detects and identifies an obstacle such as a ridge in front of a vehicle body. The ridge identification unit includes a sensor such as a distance measuring sensor.

The distance measuring sensor as described above detects an obstacle by transmitting a radio wave such as a millimeter wave and receiving a radio wave reflected by an obstacle that is a detection target. Here, depending on the position where the distance measuring sensor is installed, it may be difficult to detect the detection target.

### CITATION LIST

### PATENT LITERATURE

Patent Literature 1: JP 2023-078903 A

### SUMMARY OF INVENTION

### TECHNICAL PROBLEM

One aspect of the present disclosure has been made in view of the above circumstances, and an object of the present disclosure is to provide a working vehicle capable of suitably detecting a detection target.

### SOLUTION TO PROBLEM

The problem to be solved by one aspect of the present disclosure is as described above, and units for solving the problem will be described below.

A working vehicle according to one aspect of the present disclosure includes: a cabin having a roof; and at least one detection unit disposed at a height of the roof and capable of detecting a detection target around a vehicle body.

According to one aspect of the present disclosure, it is possible to suitably detect a detection target.

The detection unit according to one aspect of the present disclosure includes a front detection unit capable of detecting a front of the vehicle body.

According to one aspect of the present disclosure, it is possible to suitably detect a detection target in front of the vehicle body.

The detection unit according to one aspect of the present disclosure includes a rear detection unit capable of detecting a rear of the vehicle body.

According to one aspect of the present disclosure, it is possible to suitably detect a detection target behind the vehicle body.

The detection unit according to one aspect of the present disclosure includes a side detection unit capable of detecting at least one of a left side or a right side of the vehicle body.

According to one aspect of the present disclosure, it is possible to suitably detect a detection target on the left side or the right side of the vehicle body.

A plurality of the detection units according to one aspect of the present disclosure is provided.

According to one aspect of the present disclosure, it is possible to suitably perform detection in a plurality of directions.

A working vehicle according to one aspect of the present disclosure includes a plurality of imaging units disposed at a height of the roof and capable of imaging surroundings of the vehicle body.

According to one aspect of the present disclosure, it is possible to suitably perform imaging using an imaging unit.

A working vehicle according to one aspect of the present disclosure includes a support member disposed on an outer periphery of the roof and capable of supporting the detection unit and the imaging unit.

According to one aspect of the present disclosure, the plurality of detection units and the plurality of imaging units can be disposed on the outer periphery of the roof using the support member.

The roof according to one aspect of the present disclosure includes a top portion, and the detection unit is disposed such that an upper surface of the detection unit is positioned below the top portion.

According to one aspect of the present disclosure, the working vehicle can be made compact in the vertical direction, and the working vehicle can be easily stored and transported in a garage or the like.

The detection unit according to one aspect of the present disclosure is a radar unit capable of detecting the detection target by emitting a radio wave, the support member includes a front support member disposed in front of the roof, and the front support member supports the radar unit and the imaging unit.

According to one aspect of the present disclosure, it is possible to suitably perform detection and imaging using radio waves in front of the vehicle body.

A working vehicle according to one aspect of the present disclosure includes a position detection device capable of detecting a position of the vehicle body and supported by the front support member, in which the radar unit is disposed such that an upper surface of the radar unit is positioned below the position detection device.

According to one aspect of the present disclosure, the working vehicle can be made compact in the vertical direction, and the working vehicle can be easily stored and transported in a garage or the like.

A support member according to one aspect of the present disclosure includes a side support member disposed on a side of the roof, and includes a connecting portion that connects the front support member and the side support member to each other.

According to one aspect of the present disclosure, members capable of supporting the detection unit and the imaging unit on the front side and the side of the vehicle body can be suitably connected to each other.

An outer peripheral portion of the roof according to one aspect of the present disclosure is formed with a recess that is recessed toward a center side of the roof in a plan view, and
the plurality of detection units and the plurality of imaging units include
the detection unit and the imaging unit disposed adjacent to each other so as to be located inside the recess.

According to one aspect of the present disclosure, the detection unit and the imaging unit disposed on the outer peripheral portion of the roof can be made inconspicuous.

The support member according to one aspect of the present disclosure includes a cover portion that covers the detection unit and the imaging unit from above, the cover portion includes a side wall formed so as not to be positioned within an angle of view of the imaging unit, and the detection unit covered by the cover portion is disposed along the side wall.

According to one aspect of the present disclosure, it is possible to prevent the detection unit from being positioned within the angle of view of the imaging unit while disposing the detection unit in the vicinity of the imaging unit.

One of a plurality of the detection units and a plurality of the imaging units according to one aspect of the present disclosure is disposed at least on each of four sides in a plan view of the roof so as to enable detection or imaging in forward, rearward, and both left and right directions from the vehicle body, and another of the plurality of the detection units and the plurality of the imaging units is disposed at least on each of four corners in a plan view of the roof so as to enable detection or imaging in forward, rearward, and both left and right directions from the vehicle body.

According to one aspect of the present disclosure, a plurality of detection units and a plurality of imaging units can be disposed at positions where the detection units and the imaging units can be prevented from being located in the mutual imaging range and detection range.

According to one aspect of the present disclosure, one of the plurality of detection units and the plurality of imaging units
is disposed on both four sides and four corners of the roof in a plan view.

According to one aspect of the present disclosure, a blind spot of a detection range of a detection unit or an imaging range of an imaging unit can be reduced.

### ADVANTAGEOUS EFFECTS OF INVENTION

According to one aspect of the present disclosure, it is possible to suitably detect a detection target.

### BRIEF DESCRIPTION OF DRAWINGS

Fig. 1 is a side view illustrating an overall configuration of a tractor according to a first embodiment of the present disclosure.
Fig. 2 is a perspective view illustrating a roof of a cabin.
Fig. 3 is a plan view illustrating the roof.
Fig. 4 is a side view illustrating the roof.
Fig. 5 is an exploded perspective view illustrating a position detection device, a camera, a radar unit, a camera support unit, a radar support unit, a front support member, a rear support member, and a side support member.
Fig. 6 is an exploded perspective view illustrating the position detection device, a front camera, a front camera support unit, and a front support member.
Fig. 7 is an exploded perspective view illustrating a rear camera and a rear camera support unit.
Fig. 8 is a perspective view illustrating a left side camera and a side camera support unit.
Fig. 9 is an exploded perspective view illustrating a front radar unit, a front radar support unit, and a front support member.
Fig. 10 is an exploded perspective view illustrating a rear radar unit, a rear radar support unit, and a rear support member.
Fig. 11 is a rear perspective view illustrating a rear part of the roof.
Fig. 12 is an enlarged side view illustrating a side portion of a roof of a tractor according to a second embodiment of the present disclosure.
Fig. 13(a) is a plan view illustrating a front camera, a front radar unit, a front radar support unit and a front support member of a tractor according to a third embodiment of the present disclosure. Fig. 13(b) is a side view illustrating a front camera, a front radar unit, a front radar support unit, and a front support member.
Fig. 14 is a plan view illustrating a roof of a tractor according to a fourth embodiment of the present disclosure.
Fig. 15 is a plan view illustrating a roof of a tractor according to a fifth embodiment of the present disclosure.

### DESCRIPTION OF EMBODIMENTS

In the following description, directions indicated by arrows U, D, F, B, L, and R in the drawings are defined as an upward direction, a downward direction, a forward direction, a backward direction, a left direction, and a right direction, respectively.

First, an overall configuration of a tractor 1 according to one aspect of the present disclosure will be described.

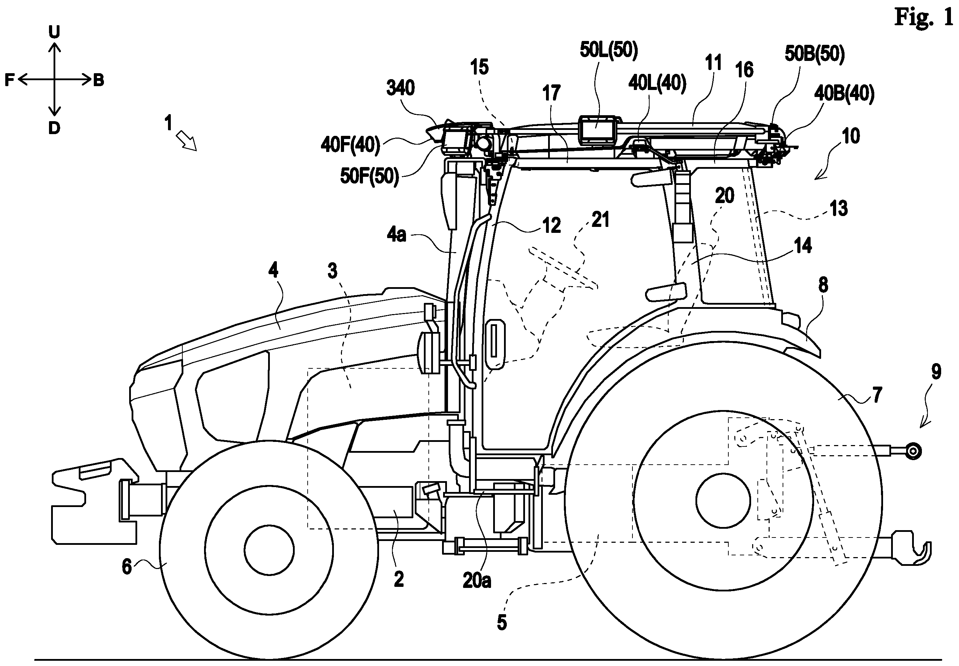

The tractor 1 illustrated in Fig. 1 mainly includes a machine body frame 2, an engine 3, a hood 4, a transmission case 5, front wheels 6, rear wheels 7, fenders 8, a lifting device 9, a cabin 10, a seat 20, a steering wheel 21, and the like.

The machine body frame 2 is a frame-shaped member formed by appropriately combining a plurality of panel members. The machine body frame 2 is formed in a substantially rectangular shape in plan view. The machine body frame 2 is disposed in a front portion of the tractor 1 with its longitudinal direction oriented in the front-rear direction. The engine 3 is fixed to a rear portion of the machine body frame 2. The engine 3 is covered with the hood 4. The transmission case 5 is fixed to a rear portion of the engine 3. A muffler 4a that discharges exhaust gas of the engine 3 is disposed on the right side of the hood 4.

The front portion of the machine body frame 2 is supported by the pair of left and right front wheels 6 through a front axle mechanism (not illustrated). A rear portion of the transmission case 5 is supported by the pair of left and right rear wheels 7 through a rear axle mechanism (not illustrated). The pair of left and right rear wheels 7 are substantially covered from above by the fenders 8.

The lifting device 9 is provided at the rear portion of the transmission case 5. Various working devices (for example, a cultivator or the like) can be attached to the lifting device 9. The lifting device 9 can lift and lower the attached working device by an actuator such as a hydraulic cylinder. Power of the engine 3 can be transmitted to the working device attached to the lifting device 9 via a PTO shaft (not illustrated).

Power of the engine 3 can be transmitted to the front wheel 6 through the front axle mechanism and can be transmitted to the rear wheel 7 through the rear axle mechanism after being shifted by a transmission (not illustrated) housed in the transmission case 5. The front wheels 6 and the rear wheels 7 are rotationally driven by the power of the engine 3, and the tractor 1 can travel. In addition, the working device attached to the lifting device 9 can be driven by the power of the engine 3.

The cabin 10 is provided behind the engine 3. The cabin 10 is placed on a vehicle body (such as the transmission case 5). An interior space in which an operator rides is formed inside the cabin 10. As illustrated in Fig. 1, a seat 20 on which a driver sits is disposed substantially at the center of the cabin 10. The cabin 10 is provided with an auxiliary step 20a for getting in and out of the seat 20. Further, a steering wheel 21 for adjusting the turning angle of the front wheels 6 is disposed in the front portion of the cabin 10.

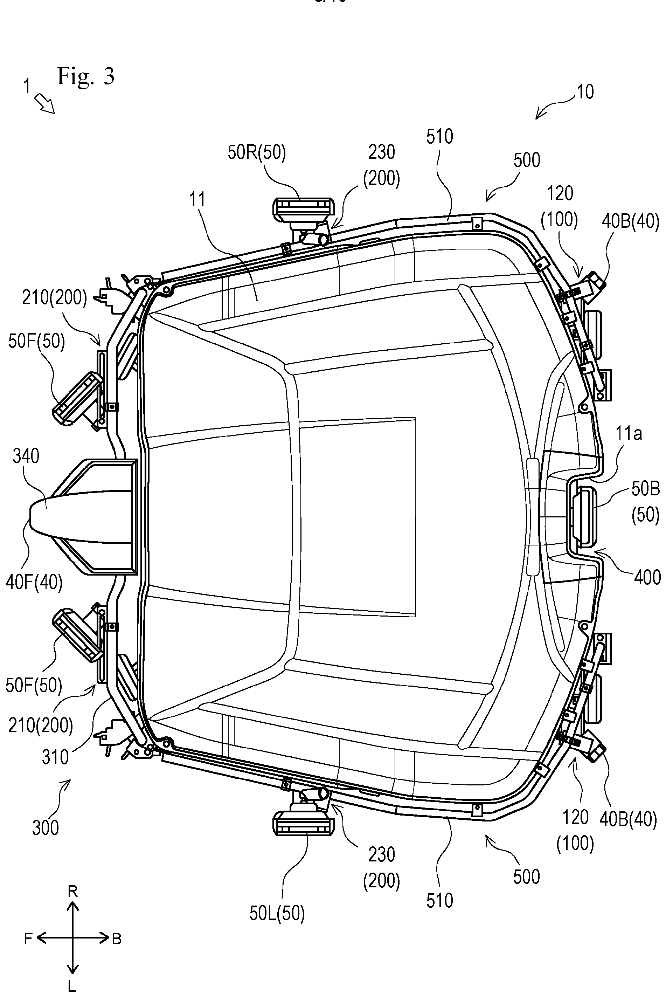

The cabin 10 is provided with a roof 11 constituting a ceiling (roof) portion. The roof 11 is formed in a substantially rectangular shape in plan view (see Fig. 3). The cabin 10 includes a front pillar 12 that supports a front portion of the roof 11, a rear pillar 13 that supports a rear portion of the roof 11, and a center pillar 14 that supports a substantially central portion (intermediate portion) in the front-rear direction of the roof 11. The pillars are provided so as to be located on both left and right sides of the cabin 10. The cabin 10 includes a front beam 15 that couples upper ends of the left and right front pillars 12, a rear beam 16 that couples upper ends of the left and right rear pillars 13 and the left and right center pillars 14, and a side beam 17 that couples the upper ends of the front pillars 12 and the center pillars 14. The side beams 17 are provided so as to be positioned on both left and right sides of the cabin 10.

The roof 11, the pillars, and the beams are formed in a hollow shape. Wiring to be connected to equipment (for example, a position detection device 30, a camera 40, a radar unit 50, and the like, which will be described later) provided in the tractor 1 can be inserted into the roof 11, each pillar, and a space inside each beam.

In addition, the tractor 1 according to the present embodiment includes a position detection device 30, a camera 40, a radar unit 50, a camera support unit 100, a radar support unit 200, a front support member 300, a rear support member 400, and a side support member 500.

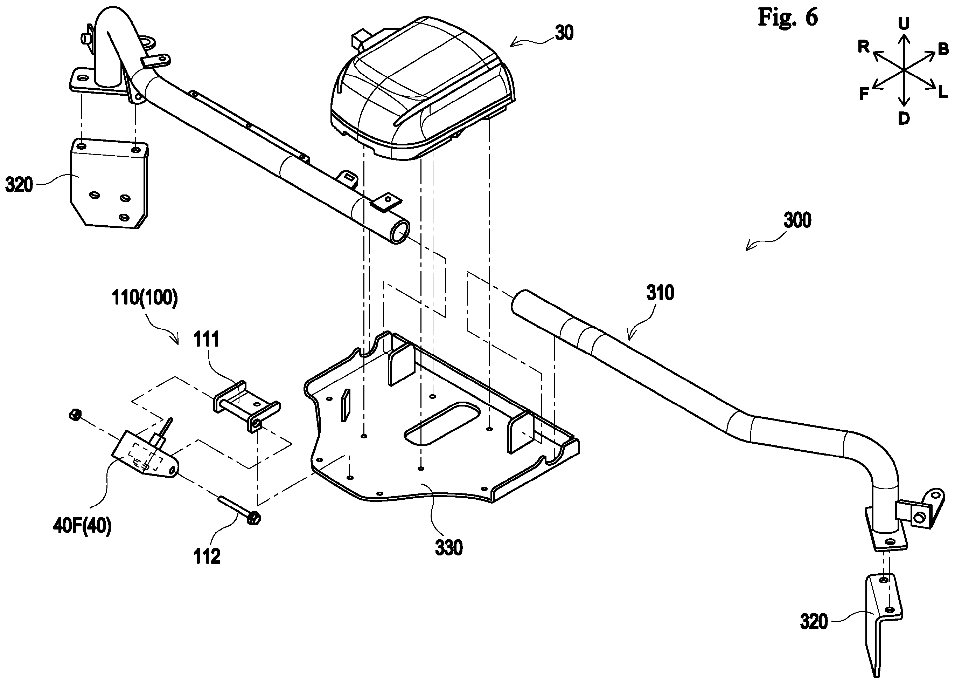

The position detection device 30 illustrated in Fig. 6 is a device capable of detecting a position (position information including latitude and longitude) of a vehicle body using a satellite positioning system (GNSS) such as a GPS, various sensors, and the like. The position detection device 30 includes appropriate reception means for receiving a satellite signal transmitted from a satellite. The position detection device 30 is attached to an attachment target (front support member 300 to be described later) disposed in front of the roof 11 of the cabin 10. Note that the arrangement mode of the position detection device 30 will be described in detail later.

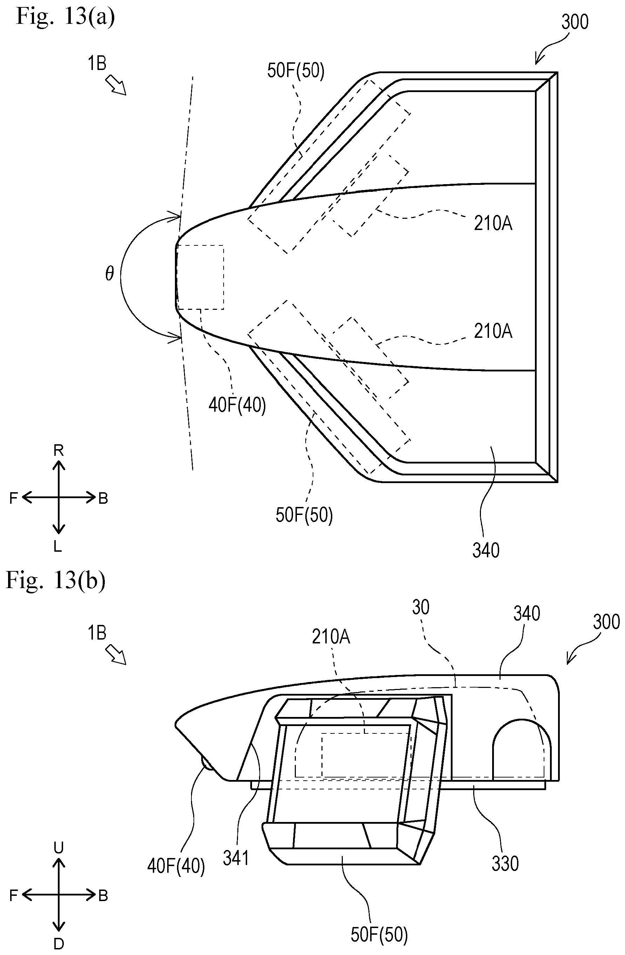

The camera 40 illustrated in Figs. 1 to 3 can image the periphery of the vehicle body. The tractor 1 can control the operation of the vehicle body based on the image captured by the camera 40. For example, a person's appearance is learned on the basis of an image captured by a camera, and in a case where it is detected that a person approaches the vicinity of the tractor 1 from an imaging result of each camera, control for stopping the tractor 1 can be performed. Note that the use of each camera is not limited to this, and the captured image can be used for various uses. As the angle θ of the angle of view (viewing angle) of the camera 40, for example, 190° can be adopted (see Fig. 13(a)). Note that the angle θ is not limited to the above-described value, and various values can be adopted.

A plurality of cameras 40 is disposed around the roof 11 so as to be able to image the front, rear, left, and right of the vehicle body. Hereinafter, the camera 40 disposed in front of the roof 11 so as to be able to image the front of the vehicle body is referred to as a "front camera 40F". Further, the cameras 40 disposed on the left and right sides of the roof 11 so as to be able to image both left and right sides of the vehicle body are referred to as "left side camera 40L" and "right side camera 40R", respectively. Further, the camera 40 disposed behind the roof 11 so as to be able to image the rear of the vehicle body is referred to as a "rear camera 40B". A pair of rear cameras 40B is disposed at intervals in the left-right direction. As described above, in the present embodiment, the five cameras 40 are disposed around the roof 11. Note that the installation mode of each camera 40 will be described in detail later.

The radar unit 50 illustrated in Figs. 1 to 3 can detect a detection target around the vehicle body using radio waves (for example, millimeter waves). Examples of the detection target include a structure formed of metal or concrete, another vehicle, a person, and the like. The radar unit 50 is provided with a sensor (for example, a millimeter wave sensor) that emits radio waves and receives the radio waves reflected by the detection target to detect the detection target.

A plurality of radar units 50 is disposed around the roof 11 so as to be able to detect detection targets on the front, rear, left, and right of the vehicle body. Hereinafter, the radar unit 50 disposed in front of the roof 11 so as to be able to detect a detection target in front of the vehicle body is referred to as a "front radar unit 50F". A pair of front radar units 50F is disposed at intervals in the left-right direction. Further, the radar units 50 disposed on the left and right sides of the roof 11 so as to be able to detect detection targets on both left and right sides of the vehicle body are referred to as "left side radar unit 50L" and "right side radar unit 50R", respectively. Further, the radar unit 50 disposed behind the roof 11 so as to be able to detect a detection target behind the vehicle body is referred to as a "rear radar unit 50B". As described above, in the present embodiment, the five radar units 50 are disposed around the roof 11. Note that the installation mode of each radar unit 50 will be described in detail later.

The position detection device 30, the camera 40, and the radar unit 50 are communicably connected to an appropriate control device capable of controlling traveling of the tractor 1 via wiring. The control device can detect the position information of the vehicle body based on the GNSS signal received by the position detection device 30. Further, the control device can execute control for driving the tractor 1 in an automated manner (automated driving control) on the basis of the position information, the image captured by the camera 40, and the detection result of the radar unit 50. The automated driving control includes, for example, control for steering the vehicle body in an automated manner so as to travel straight in parallel to a set predetermined traveling reference line, control for the vehicle body to travel in an automated manner along the created target traveling route, and control for the vehicle body to stop or decelerate in an automated manner by detecting an obstacle around the vehicle body.

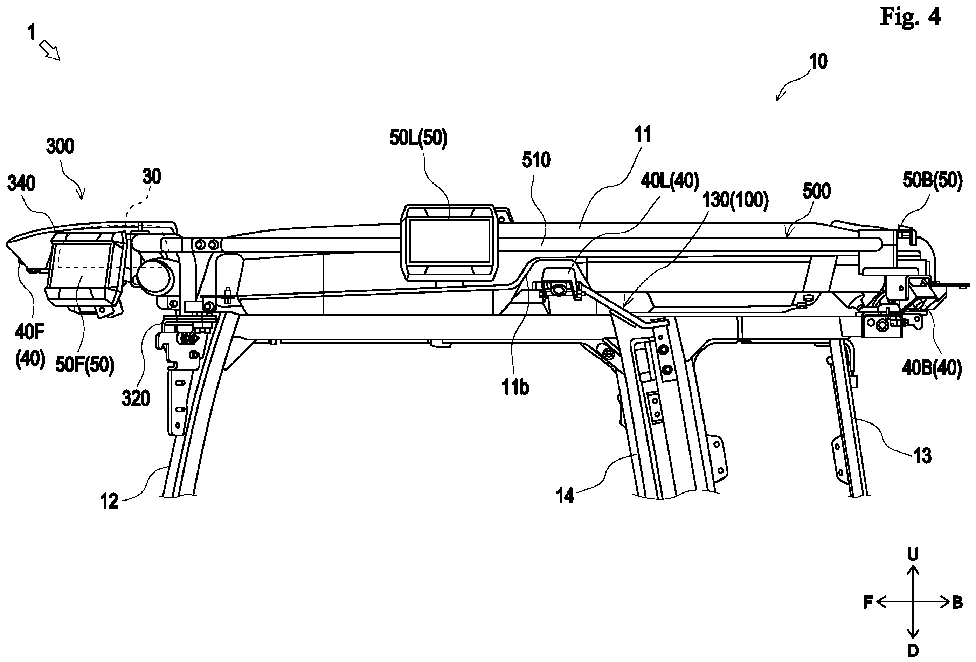

The camera support unit 100 illustrated in Figs. 4 to 6 is attached to an attachment target around the roof 11 and supports the camera 40. Note that an attachment target and an attachment mode of the camera support unit 100 will be described later. The camera support unit 100 includes a front camera support unit 110, rear camera support units 120, and side camera support units 130.

The front camera support unit 110 illustrated in Fig. 6 supports the front camera 40F. In the present embodiment, the front camera support unit 110 is attached to an upper surface of a plate-shaped attachment target (support plate 330 to be described later) disposed in front of the roof 11. Front camera support unit 110 includes a fixing unit 111 and a support shaft 112.

The fixing unit 111 is a portion that can be fixed to an attachment target. The fixing unit 111 is fixed using a fastener such as a bolt. The fixing unit 111 is formed such that a pair of left and right side walls extends upward. The support shaft 112 whose axial direction is oriented to the left and right is provided on left and right side walls of the fixing unit 111. The support shaft 112 can be formed of, for example, a bolt.

As illustrated in Fig. 6, the front camera 40F is disposed between the pair of side walls of the fixing unit 111, and is supported by the support shaft 112. The front camera 40F is supported so as to be vertically rotatable about the support shaft 112, for example, by loosening the bolt of the support shaft 112. The angle of the front camera 40F in the vertical direction can be adjusted by tightening the bolt in a state where the front camera 40F is oriented at an arbitrary angle.

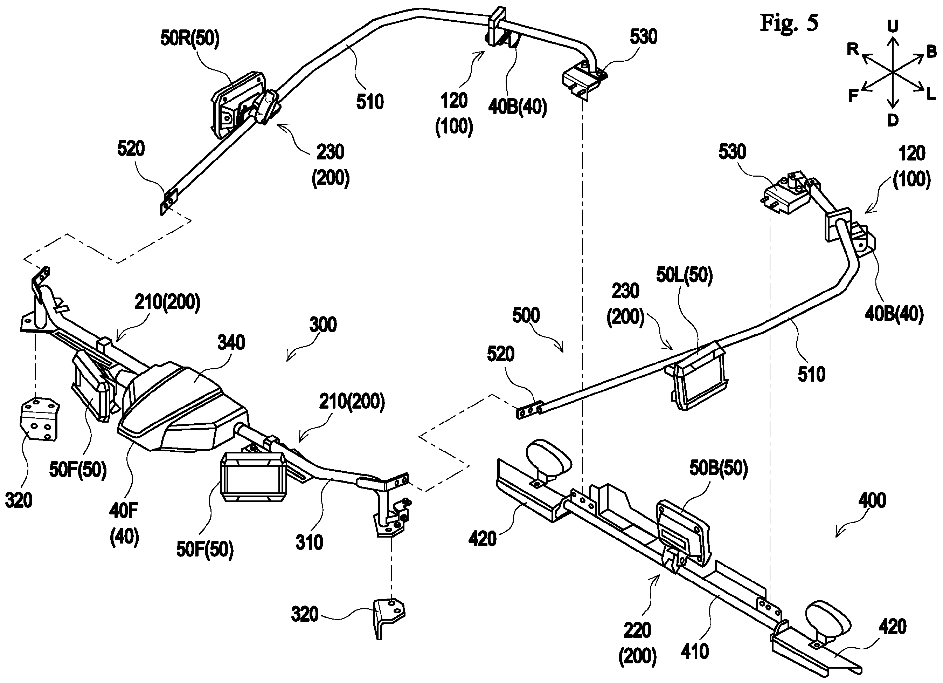

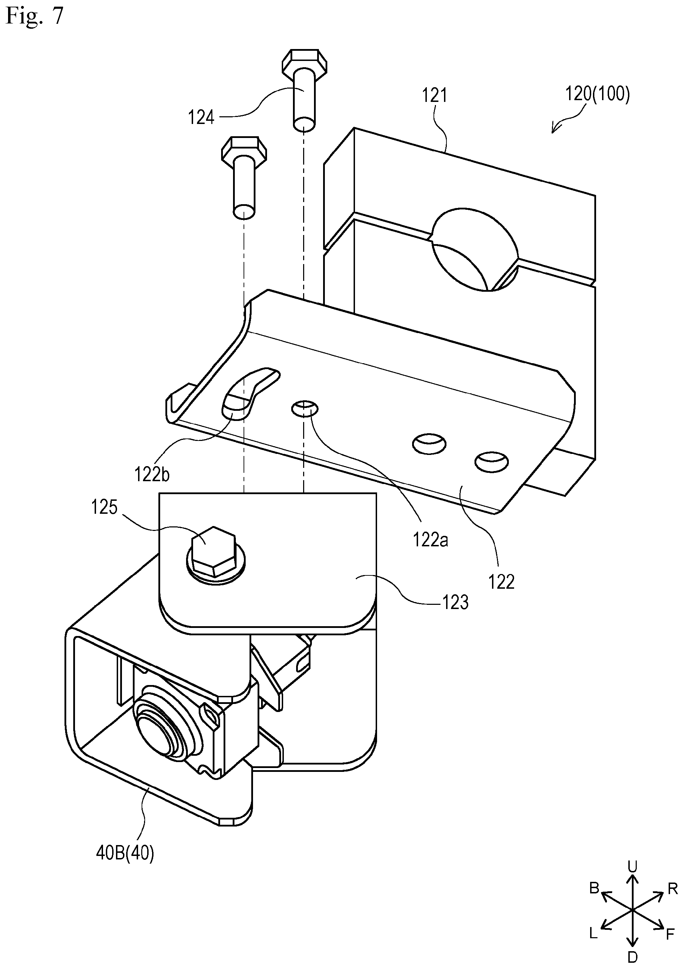

The rear camera support units 120 illustrated in Figs. 5 and 7 support the rear cameras 40B. In the present embodiment, the rear camera support units 120 are each attached to a round bar-shaped attachment target (rear portion of a side support bracket 510 to be described later) disposed behind the roof 11, and support the rear camera 40B so as to hang down. A pair of rear camera support units 120 is provided at an interval in the left-right direction so as to support the left and right rear cameras 40B, respectively (see Fig. 5). The pair of rear camera support units 120 is formed substantially bilaterally symmetrically. Hereinafter, the configuration of the rear camera support units 120 will be described focusing on the left rear camera support unit 120. The rear camera support unit 120 includes a clamp 121, a fixing unit 122, a horizontal rotation unit 123, a first support shaft 124, and a second support shaft 125.

The clamp 121 illustrated in Fig. 7 is a portion to be attached to an attachment target. The clamp 121 is attached to a round bar-shaped attachment target by sandwiching the attachment target between members divided into upper and lower parts.

The fixing unit 122 is a portion fixed to the lower surface of the clamp 121. The fixing unit 122 is formed in a substantially plate shape with a plate surface facing up and down. A shaft hole 122a vertically penetrating the fixing unit 122 is formed in the fixing unit 122. Further, the fixing unit 122 is provided with a guide hole 122b that vertically penetrates the fixing unit 122 and is formed in an arc shape with the shaft hole 122a as a circular center.

The horizontal rotation unit 123 is a portion that supports the rear camera 40B and is provided to be horizontally rotatable with respect to the fixing unit 122. The horizontal rotation unit 123 is formed such that a pair of left and right side walls extends downward. The horizontal rotation unit 123 is inserted into the shaft hole 122a of the fixing unit 122, and is connected to the fixing unit 122 via the first support shaft 124 whose axial direction is vertical. The first support shaft 124 can be formed of, for example, a bolt. Further, the horizontal rotation unit 123 is provided with a member such as a bolt to be inserted into the guide hole 122b. Further, a second support shaft 125 whose axial direction is oriented to the left and right is provided on a pair of side walls of the horizontal rotation unit 123. The second support shaft 125 can be formed of, for example, a bolt. The rear camera 40B (left rear camera 40B) is disposed between the pair of side walls of the horizontal rotation unit 123 and is supported by the second support shaft 125.

The horizontal rotation unit 123 is rotatably supported about the first support shaft 124 along the guide hole 122b by loosening the bolt of the first support shaft 124. The angle of the rear camera 40B in the horizontal direction can be adjusted by tightening the bolt in a state where the horizontal rotation unit 123 is oriented at an arbitrary angle. Further, the rear camera 40B is supported so as to be vertically rotatable about the second support shaft 125 by loosening the bolt of the second support shaft 125. The angle of the rear camera 40B in the vertical direction can be adjusted by tightening a bolt in a state where the rear camera 40B is directed at an arbitrary angle. In this manner, the rear camera 40B is supported so as to be able to adjust the angle in the horizontal direction and the vertical direction around the two axes.

The left rear camera support unit 120 has been described above. The right rear camera support unit 120 is also formed substantially similarly to the left rear camera support unit 120 described above, and supports the right rear camera 40B such that the angles in the horizontal direction and the vertical direction can be adjusted.

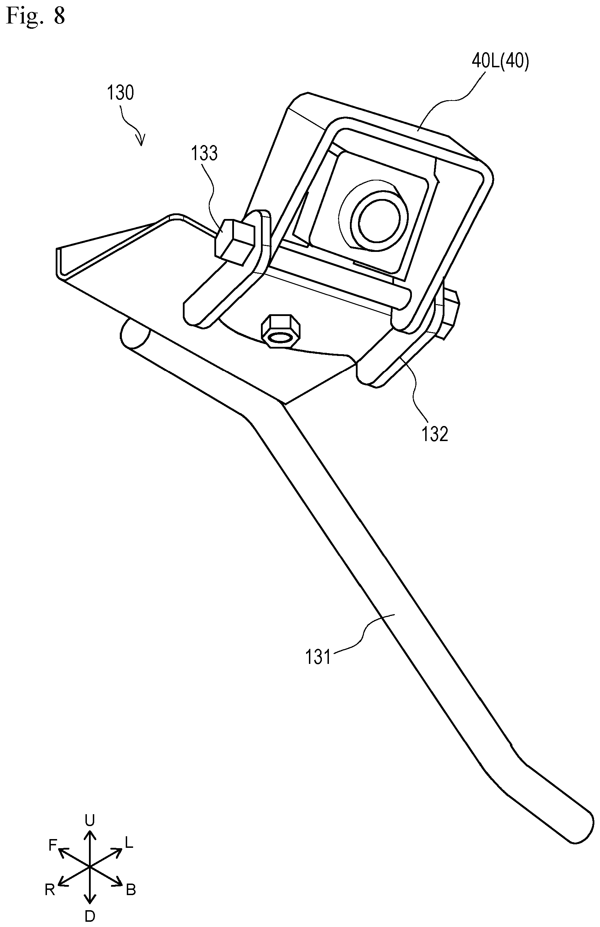

The side camera support unit 130 illustrated in Figs. 4 and 8 supports the left side camera 40L and the right side camera 40R, respectively. A pair of side camera support units 130 is provided so as to be located on both left and right sides of the roof 11. The pair of side camera support units 130 is formed substantially bilaterally symmetrically. The side camera support unit 130 is attached to an attachment target (an upper end of a center pillar 14 to be described later) disposed on the side of the roof 11. Hereinafter, the configuration of the side camera support unit 130 will be described focusing on the left side camera support unit 130 that supports the left side camera 40L. The side camera support unit 130 includes a support bracket 131, a fixing unit 132, and a support shaft 133.

The support bracket 131 is a portion fixed to the center pillar 14. The support bracket 131 is formed to extend obliquely forward and upward from the center pillar 14 side. A front end of the support bracket 131 is formed in a substantially plate shape with a plate surface facing up and down.

The fixing unit 132 is a portion fixed to the support bracket 131. The fixing unit 132 is fixed to the lower surface of the front end of the support bracket 131 using a fastener such as a bolt. The fixing unit 132 is formed such that a pair of front and rear side walls extends downward. Support shafts 133 whose axial directions are directed forward and backward are provided on the front and rear side walls of the fixing unit 132. The support shaft 133 can be formed of, for example, a bolt.

As illustrated in Fig. 8, the left side camera 40L is disposed between the pair of side walls of fixing unit 132, and is supported by the support shaft 133. The left side camera 40L is supported so as to be vertically rotatable about the support shaft 133, for example, by loosening the bolt of the support shaft 133. The angle of the left side camera 40L in the vertical direction can be adjusted by tightening the bolt in a state where the left side camera 40L is oriented at an arbitrary angle.

The left side camera support unit 130 has been described above. The right side camera support unit 130 is also formed substantially similarly to the left side camera support unit 130 described above, and supports the right side camera 40R such that the angle in the vertical direction can be adjusted.

The radar support unit 200 illustrated in Figs. 5, 9, and 10 is attached to an attachment target around the roof 11 and supports the radar unit 50. Note that an attachment target and an attachment mode of the radar support unit 200 will be described later. The radar support unit 200 includes a front radar support unit 210, a rear radar support unit 220, and a side radar support unit 230.

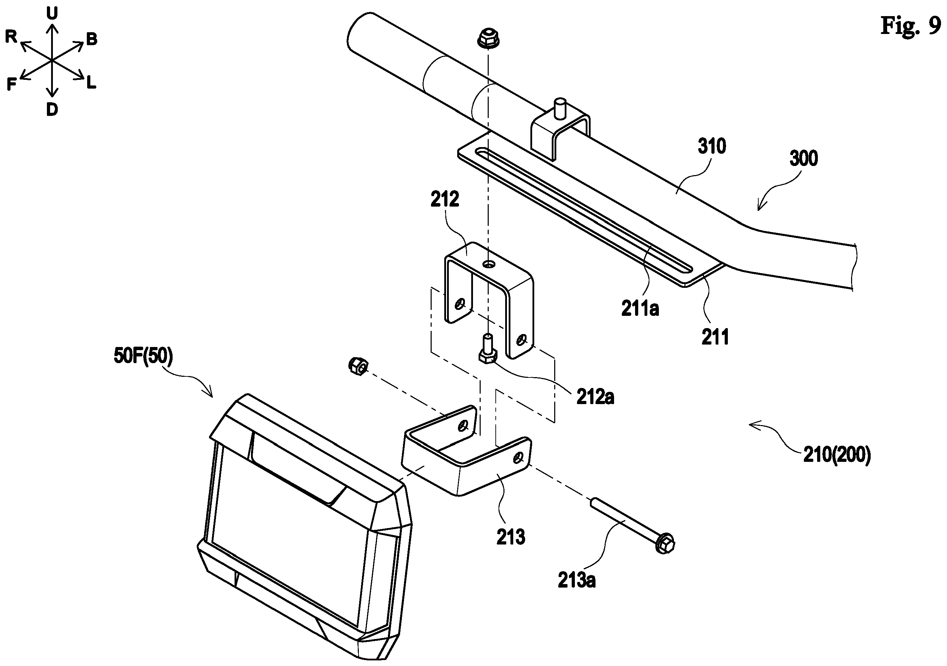

The front radar support unit 210 illustrated in Figs. 5 and 9 supports the front radar unit 50F. In the present embodiment, the front radar support unit 210 is attached to a round bar-shaped attachment target (front support bracket 310 to be described later) disposed in front of the roof 11, and supports the front radar unit 50F so as to hang down. A pair of front radar support units 210 is provided at an interval in the left-right direction so as to support the left and right front radar units 50F, respectively (see Fig. 5). The pair of left and right front radar units 50F is disposed so as to be located on both sides in the left-right direction of the front camera support unit 110 (front camera 40F). Further, the pair of front radar support units 210 is formed substantially bilaterally symmetrically. Hereinafter, the configuration of the front radar support unit 210 will be described focusing on the left front radar support unit 210. The front radar support unit 210 includes a fixing unit 211, a horizontal rotation unit 212, and a vertical rotation unit 213.

The fixing unit 211 illustrated in Fig. 9 is a portion that can be fixed to an attachment target. The fixing unit 211 is fixed to an attachment target, for example, by welding or the like. The fixing unit 211 is formed in a substantially plate shape with a plate surface facing up and down. Further, the fixing unit 211 is formed in a shape elongated in the left-right direction. A hole 211a vertically penetrating the fixing unit 211 is formed in the fixing unit 211. In the present embodiment, the hole 211a is formed in a long hole shape extending in the left-right direction.

The horizontal rotation unit 212 is connected to the fixing unit 211 so as to be movable to the left and right and to be horizontally rotatable. The horizontal rotation unit 212 is provided on the lower surface of the fixing unit 211. The horizontal rotation unit 212 is formed such that a pair of left and right side walls extends downward. The horizontal rotation unit 212 is inserted into the hole 211a of the fixing unit 211 and is connected to the fixing unit 211 via a first support shaft 212a whose axial direction is vertical. The first support shaft 212a can be formed of, for example, a bolt.

The vertical rotation unit 213 is fixed to the front radar unit 50F and is vertically rotatably connected to the horizontal rotation unit 212. The vertical rotation unit 213 is appropriately fixed to the back surface (the surface opposite to the surface that emits radio waves) of the front radar unit 50F. The vertical rotation unit 213 is formed such that a pair of left and right side walls extends rearward. The pair of side walls of the vertical rotation unit 213 is connected to the pair of side walls of the horizontal rotation unit 212 via the second support shaft 213a. The second support shaft 213a can be formed of, for example, a bolt.

The horizontal rotation unit 212 is supported to be movable to the left and right along the long hole-shaped hole 211a and to be rotatable about the first support shaft 212a by loosening the bolt of the first support shaft 212a. The horizontal position and the angle in the horizontal direction of the front radar unit 50F (left front radar unit 50F) can be adjusted by tightening the bolt in a state where the horizontal rotation unit 212 is directed to an arbitrary angle at an arbitrary left-right position.

Further, the vertical rotation unit 213 is supported so as to be vertically rotatable about the second support shaft 213a by loosening the bolt of the second support shaft 213a. By tightening the bolts with the front radar unit 50F oriented at an arbitrary angle, the angle of the front radar unit 50F in the vertical direction can be adjusted. As described above, the front radar unit 50F is supported so as to be able to adjust the angles in the horizontal direction and the vertical direction about the two axes.

The left front radar support unit 210 has been described above. The right front radar support unit 210 is also formed substantially similarly to the left front radar support unit 210 described above, and supports the right front radar unit 50F such that the angles in the horizontal direction and the vertical direction can be adjusted. Note that, in the example described above, the hole 211a of the fixing unit 211 is formed in a long hole shape. However, the hole 211a may be formed in a round hole shape.

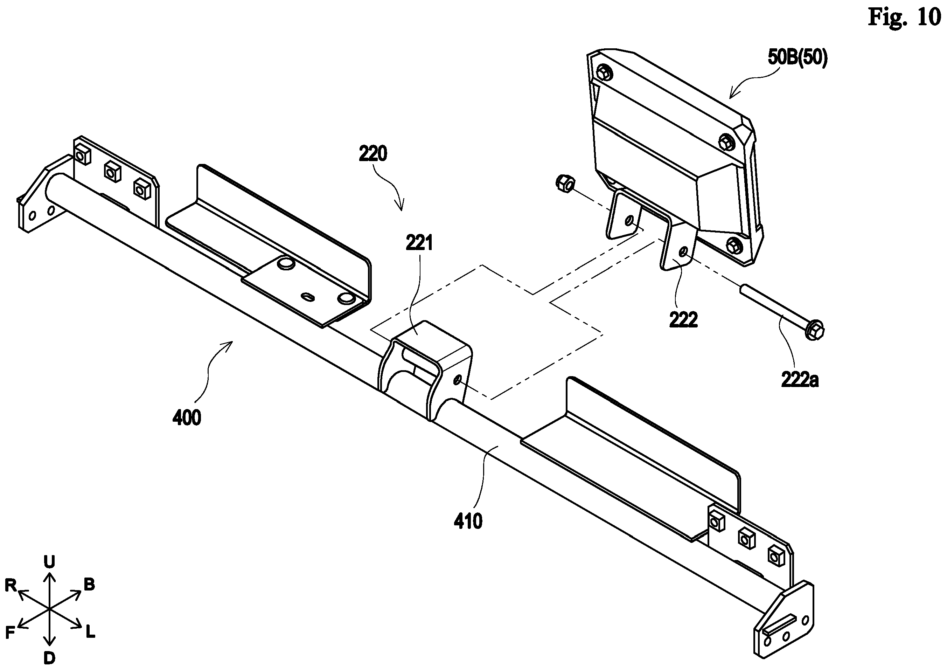

The rear radar support unit 220 illustrated in Figs. 5 and 10 supports the rear radar unit 50B. In the present embodiment, the rear radar support unit 220 is attached to a round bar-shaped attachment target (rear support bracket 410 to be described later) disposed on the rear side of the roof 11. The rear radar support unit 220 includes a fixing unit 221 and a vertical rotation unit 222.

The fixing unit 221 is a portion that can be fixed to an attachment target. The fixing unit 221 is fixed to an attachment target, for example, by welding or the like.

The vertical rotation unit 222 is fixed to the rear radar unit 50B and is vertically rotatably connected to the fixing unit 221. The vertical rotation unit 222 is appropriately fixed to the back surface of the rear radar unit 50B. The vertical rotation unit 222 is formed such that a pair of left and right side walls extends downward.

As illustrated in Fig. 10, the pair of side walls of the vertical rotation unit 222 is connected to the fixing unit 221 via a support shaft 222a in a state where the fixing unit 221 is disposed so as to be positioned between the pair of side walls. The vertical rotation unit 222 is supported so as to be vertically rotatable about the support shaft 222a by loosening the bolt of the support shaft 222a. The angle of the rear radar unit 50B in the vertical direction can be adjusted by tightening the bolt in a state where the rear radar unit 50B is oriented at an arbitrary angle.

The side radar support unit 230 illustrated in Fig. 5 supports each of the left side radar unit 50L and the right side radar unit 50R. A pair of side radar support units 230 is provided so as to be located on both left and right sides of the roof 11. The pair of side radar support units 230 is formed substantially bilaterally symmetrically. In the present embodiment, the pair of side radar support units 230 is attached to round bar-shaped attachment targets (side support brackets 510 to be described later) disposed on both left and right sides of the roof 11. Hereinafter, the configuration of the side radar support unit 230 will be described focusing on the right side radar support unit 230 that supports the right side radar unit 50R.

The side radar support unit 230 connects the right side radar unit 50R and the attachment target so as to adjust the angles in the horizontal and vertical directions of the right side radar unit 50R. The side radar support unit 230 according to the present embodiment connects the right side radar unit 50R and the attachment target by a ball joint such that the angle of the right side radar unit 50R can be adjusted. Note that the left side radar support unit 230 is formed substantially similarly to the right side radar support unit 230 described above, and supports the left side radar unit 50L such that the angles in the horizontal direction and the vertical direction can be adjusted.

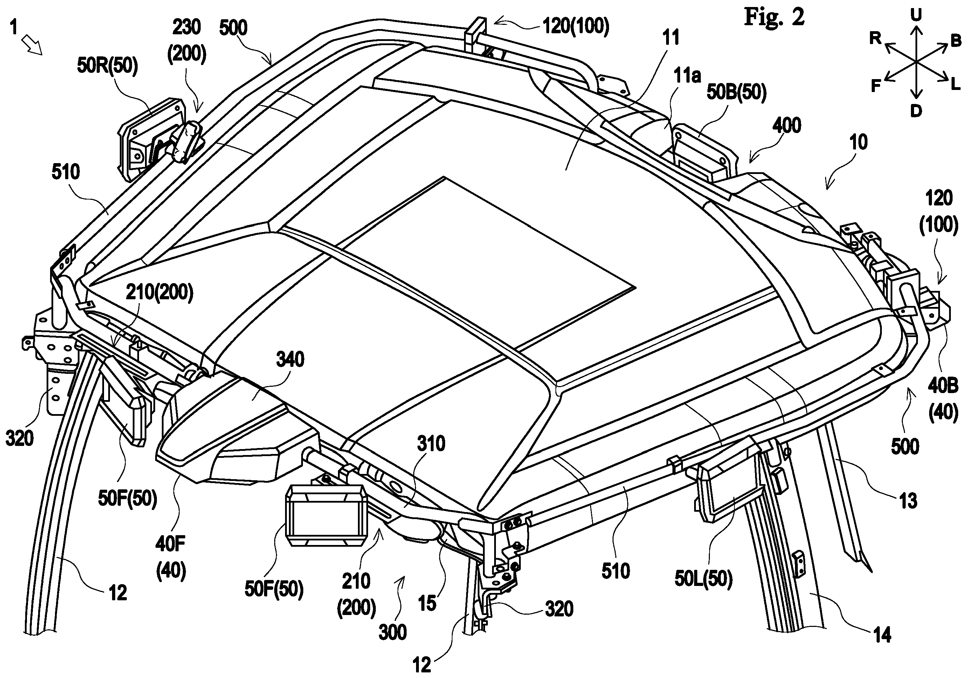

As described above, the respective devices (position detection device 30, camera 40 (camera support unit 100), and radar unit 50 (radar support unit 200)) of the tractor 1 are provided so as to be positioned at the periphery (outer periphery) of the roof 11 via the front support member 300, the rear support member 400, and the side support member 500. As illustrated in Fig. 3, in the present embodiment, the front support member 300, the rear support member 400, and the side support member 500 are disposed so as to surround substantially the entire periphery of the roof 11 in plan view (see Figs. 2 and 3). Hereinafter, configurations of the front support member 300, the rear support member 400, and the side support member 500, and attachment modes of the respective devices will be described.

The front support member 300 illustrated in Figs. 2 to 6 is capable of supporting devices and the like of the tractor 1 in front of the roof 11. The front support member 300 according to the present embodiment supports the position detection device 30, the front camera 40F (front camera support unit 110), and the front radar unit 50F (front radar support unit 210). Note that, in Fig. 6, illustration of the front radar unit 50F and the front radar support unit 210 is omitted. As illustrated in Fig. 2, the front support member 300 is disposed so as to extend over the left and right front pillars 12. The front support member 300 includes a front support bracket 310, a fixing member 320, a support plate 330, and a unit cover 340.

The front support bracket 310 illustrated in Figs. 5 and 6 is a main structural body of the front support member 300. The front support bracket 310 is formed of a member (for example, a hollow round bar) elongated in the left-right direction. The front support bracket 310 is formed in a shape that is appropriately bent according to a shape of a front portion of the roof 11 or a shape of a member around the front portion of the roof 11. Both ends of the front support bracket 310 in the left-right direction are formed so as to extend downward. Further, the front support bracket 310 is divided into right and left parts, and is formed by two members that are bilaterally symmetrical to each other.

The fixing member 320 illustrated in Figs. 2 and 6 is fixed to the front pillar 12, and both ends of the front support bracket 310 in the left-right direction are attached. The fixing member 320 is fixed to the upper ends of the left and right front pillars 12 using fasteners such as bolts. Further, the left and right fixing members 320 are fixed to both ends of the front support bracket 310 in the left-right direction using fasteners such as bolts.

The support plate 330 illustrated in Fig. 6 supports the position detection device 30 and the front camera support unit 110. The support plate 330 is formed in a substantially plate shape with a plate surface facing up and down. A front portion of the support plate 330 in a plan view is formed in a tapered shape (shape in which a lateral width gradually decreases toward the front). The position detection device 30 is attached to a central portion in the left-right direction on the upper surface of the support plate 330.

On the upper surface of the support plate 330, on both left and right side portions of the position detection device 30, center side portions of the front support bracket 310 in the left-right direction (respective ends divided into left and right portions) are fixed by welding or the like. Further, on the upper surface of the support plate 330, the fixing unit 111 of the front camera support unit 110 is fixed in front of the position detection device 30. As described above, in the present embodiment, the support plate 330 is adopted as an attachment target of the front camera support unit 110.

The unit cover 340 illustrated in Figs. 3 and 5 covers the support plate 330 from above. The unit cover 340 is formed in a substantially box shape that opens downward. The unit cover 340 is formed in a shape corresponding to the support plate 330 in plan view. The unit cover 340 is fixed to the upper surface of the support plate 330 using a fastener such as a bolt. The unit cover 340 configured as described above covers the position detection device 30 provided on the upper surface of the support plate 330, the front camera 40F, and the front camera support unit 110. Note that an opening is formed at the front end of unit cover 340 to expose the front camera 40F.

As illustrated in Figs. 5 and 9, in the present embodiment, the front support bracket 310 is adopted as an attachment target of the front radar support unit 210. As illustrated in Figs. 3 and 5, in the present embodiment, the left and right front radar support units 210 are provided so that the left and right front radar units 50F are located on the left and right sides of the unit cover 340, respectively.

In the present embodiment, the left and right front radar units 50F and the front camera 40F are separated from each other in the left and right direction, and the left and right front radar units 50F are disposed behind the front camera 40F so that the left and right front radar units 50F are not positioned within the angle of view of the front camera 40F. In the present embodiment, the left and right front radar units 50F are inclined outward in the left-right direction with respect to the front in plan view by a predetermined angle (approximately 45 degrees in the illustrated example) such that other members such as the unit cover 340 are not positioned in the detection ranges of the left and right front radar units 50F. Since the front camera 40F and the front radar unit 50F are disposed as described above, it is possible to prevent other members from being positioned in the imaging range of the front camera 40F and the detection range of the front radar unit 50F.

The rear support member 400 illustrated in Figs. 5, 10, and 11 is capable of supporting devices and the like of the tractor 1 behind the roof 11. The rear support member 400 according to the present embodiment supports the rear radar unit 50B (rear radar support unit 220). The rear support member 400 is fixed to the rear of the rear beam 16. The rear support member 400 includes a rear support bracket 410 and a bracket fixing unit 420.

The rear support bracket 410 is a main structural body of the rear support member 400. The rear support bracket 410 is formed of a member (for example, a hollow round bar) elongated in the left-right direction.

The bracket fixing unit 420 is a portion fixed to the rear portion of the rear beam 16. The bracket fixing unit 420 is provided at each of both ends of the rear support bracket 410 in the left-right direction.

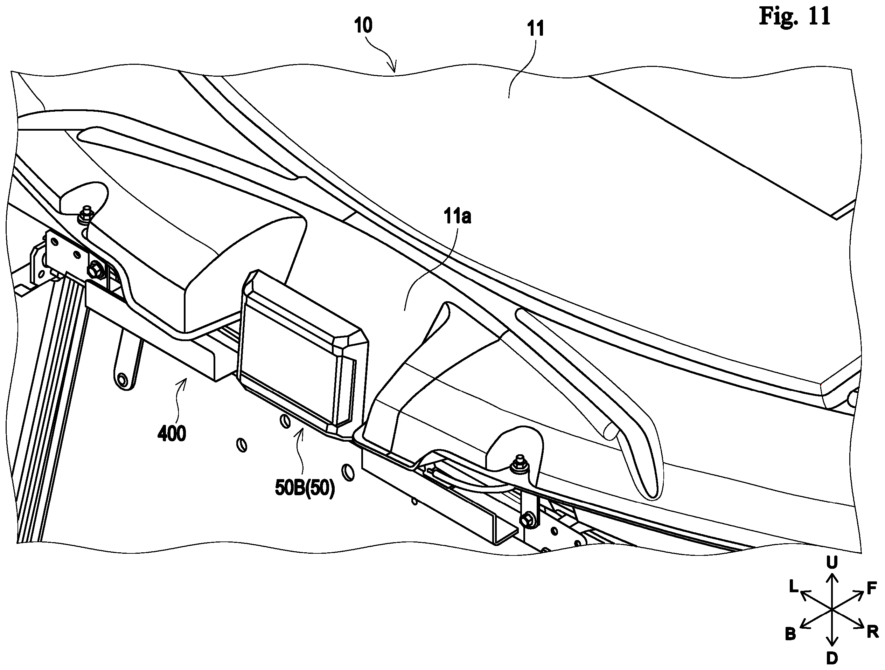

In the present embodiment, the rear support bracket 410 is adopted as an attachment target of the rear radar support unit 220. As illustrated in Fig. 11, the rear radar unit 50B supported by the rear radar support unit 220 is located in a recess 11a formed to be recessed forward at the center in the left-right direction of the rear portion of the roof 11.

The side support members 500 illustrated in Figs. 2 to 5 can support devices of the tractor 1 on both left and right sides of the roof 11. The side support member 500 according to the present embodiment supports the left side radar unit 50L, the right side radar unit 50R (side radar support unit 230), and the rear camera 40B (rear camera support unit 120).

The side support member 500 is disposed across the front support member 300 and the rear support member 400. A pair of side support members 500 is provided so as to be positioned on both left and right sides of the roof 11. The pair of side support members 500 is formed substantially bilaterally symmetrically. Hereinafter, the configuration of the side support member 500 will be described focusing on the left side support member 500. The side support member 500 includes a side support bracket 510, a front fixing unit 520, and a rear fixing unit 530.

The side support bracket 510 illustrated in Fig. 5 is a main structural body of the side support member 500. The side support bracket 510 is formed by an elongated member (for example, a hollow round bar) along a side portion of the roof 11. The side support bracket 510 is formed in an appropriately bent shape according to the shape of the side portion of the roof 11 and the like.

The front fixing unit 520 is a portion fixed to the front support bracket 310 of the front support member 300. The front fixing unit 520 is provided at the front end of the side support bracket 510. The front fixing unit 520 is fixed to the left end (outer ends in the left-right direction) of the front support bracket 310 using a fastener such as a bolt. In a state where the front fixing unit 520 is fixed to the front support bracket 310, the front support bracket 310 and the side support bracket 510 are connected to each other.

The rear fixing unit 530 is a portion fixed to the rear support bracket 410 of the rear support member 400. The rear fixing unit 530 is provided at the rear end of the rear support bracket 410. The rear fixing unit 530 is fixed to the left end (outer ends in the left-right direction) of the rear support bracket 410 using a fastener such as a bolt. In a state where the rear fixing unit 530 is fixed to the rear support bracket 410, the rear support bracket 410 and the side support bracket 510 are connected to each other.

The left side support member 500 has been described above. The right side support member 500 is also formed substantially similarly to the left side support member 500 described above.

In the present embodiment, the side support bracket 510 is adopted as an attachment target of the side radar support unit 230 and the rear camera support unit 120. As illustrated in Figs. 2 and 3, in the present embodiment, the left and right side radar support units 230 are attached to the side support bracket 510 such that the left side radar unit 50L and the right side radar unit 50R are located substantially at the center in the front-rear direction on the side of the roof 11.

Further, as illustrated in Figs. 3 and 5, in the present embodiment, the left and right rear camera support units 120 are attached to the side support brackets 510 such that the left and right rear cameras 40B are located on both left and right sides of the rear radar unit 50B at the rear of the roof 11. More specifically, the rear camera support unit 120 is attached to a portion of the side support bracket 510 in the vicinity of the rear fixing unit 530.

In the present embodiment, the rear radar unit 50B and the left and right rear cameras 40B are separated from each other in the left and right direction so that the rear radar unit 50B and the left and right rear cameras 40B are not positioned in the imaging range and the detection range of each other.

In the present embodiment, the upper end of the center pillar 14 is adopted as an attachment target to which the side camera support unit 130 is attached. As illustrated in Fig. 4, in the present embodiment, the side camera support unit 130 is attached to the upper end of the center pillar 14 such that the left side camera 40L (right side camera 40R) is located at substantially the center in the front-rear direction on the side portion of the roof 11. The left side camera 40L (right side camera 40R) supported by the side camera support unit 130 is located in a recess 11b formed to be recessed toward the center in the left-right direction at the center in the front-rear direction of the side portion of the roof 11.

As illustrated in Fig. 4, in the present embodiment, both the left side camera 40L (right side camera 40R) and the left side radar unit 50L (right side radar unit 50R) are disposed substantially at the center in the front-rear direction on the side of the roof 11. The left side camera 40L (right side camera 40R) and the left side radar unit 50L (right side radar unit 50R) are disposed so as to be adjacent to each other in the front-rear direction.

In the present embodiment, the left side radar unit 50L (right side radar unit 50R) is disposed closer to the center in the left-right direction than the left side camera 40L (right side camera 40R) so that the left side radar unit 50L (right side radar unit 50R) is not positioned within the angle of view of the left side camera 40L (right side camera 40R).

The attachment modes of the respective devices (position detection device 30, camera 40 (camera support unit 100), and radar unit 50 (radar support unit 200)) of the tractor 1 have been described above. With the above configuration, each camera 40 can be disposed so as to be able to image substantially the entire circumference (front, rear, left, and right) of the vehicle body, and each radar unit 50 can be disposed so as to be able to detect substantially the entire circumference of the vehicle body.

Further, in the present embodiment, the cameras 40 and the radar units 50 are disposed at the height position of the roof 11 by the camera support unit 100 and the radar support unit 200. More specifically, the cameras 40 and the radar units 50 are disposed such that the height position of at least a part of the cameras and the radar units coincides with the height position of the roof 11 (when viewed in the horizontal direction, at least a part of each camera 40 and each radar unit 50 overlaps the roof 11) (see Figs. 2 and 4). As a result, unlike a case where each camera 40 and each radar unit 50 are disposed at a relatively low position (for example, the height of the hood 4), it is possible to suppress detection (imaging) of an unintended target such as plants. Further, according to the present embodiment, for example, unlike a case where the front radar unit 50F is installed in front of the hood 4, it is possible to reduce a blind spot in a detection range at the time of turning.

Further, in the present embodiment, at least one of the radar units 50 is disposed below the roof 11 in a range coinciding with the height position of the roof 11. Specifically, in the present embodiment, the upper surfaces of the front radar unit 50F and the rear radar unit 50B are disposed below the top portion (highest portion) of the roof 11 (see Fig. 4). By disposing the front radar unit 50F and the rear radar unit 50B as described above, the height of the radar unit 50 in front of and behind the roof 11 can be reduced. As a result, for example, in a case where the tractor 1 is loaded into or unloaded from the container of the cargo bed of the transportation equipment, in a case where the tractor 1 is stored in the container in an inclined manner such that the front side or the rear side of the roof 11 becomes higher, it is possible to suppress the radar units 50 in front of and behind the roof 11 from coming into contact with the ceiling of the container.

Note that at least one of the left side radar unit 50L and the right side radar unit 50R may also be disposed such that an upper surface thereof is positioned below the top portion of the roof 11. In a case where the upper surfaces of all the radar units 50 are positioned below the top portion of the roof 11, the tractor 1 can be made compact in the vertical direction. This facilitates storage and transportation of the tractor 1 in a garage or the like.

Further, in the present embodiment, at least one of the radar units 50 is disposed below the detection device 30 and the unit cover 340. Specifically, in the present embodiment, upper surfaces of the front radar unit 50F and the rear radar unit 50B are disposed below an upper surface of the detection device 30 and an upper surface of the unit cover 340 (see Fig. 4). Note that the upper surfaces of the detection device 30 and the unit cover 340 are positioned below the top portion of the roof 11. In addition, at least one of the left side radar unit 50L and the right side radar unit 50R may also be disposed such that an upper surface thereof is positioned below the upper surface of the detection device 30 and the upper surface of the unit cover 340. In addition, at least one of the radar units 50 may be disposed such that the upper surface is positioned below a lower surface of the position detection device 30 or a lower surface of the unit cover 340.

Further, the height position of each radar unit 50 is not limited to the above example. For example, at least one of the radar units 50 can be disposed above the roof 11, the position detection device 30, and the unit cover 340 in a range coinciding with the height position of the roof 11. For example, the present embodiment illustrates an example in which an upper surface of at least one of the radar units 50 (in the present embodiment, the left side radar unit 50L and the right side radar unit 50R) is disposed so as to be positioned above the top portion of roof 11, the upper surface of position detection device 30, and the upper surface of unit cover 340. Furthermore, a lower surface of at least one of the radar units 50 may be disposed so as to be positioned above the upper surface of the position detection device 30 and the upper surface of the unit cover 340.

In addition, an upper surface or lower surface of at least one of the radar units 50 may be disposed at substantially the same height as the top portion of the roof 11, the upper surface of the position detection device 30, and the upper surface of the unit cover 340, and the upper surface or lower surface of at least one of the radar units 50 may be disposed at substantially the same height as the lowest portion of the roof 11, the lower surface of the position detection device 30, and the lower surface of the unit cover 340. In addition, as the height position of each radar unit 50, various height positions can be adopted within a range that coincides with the height position of the roof 11.

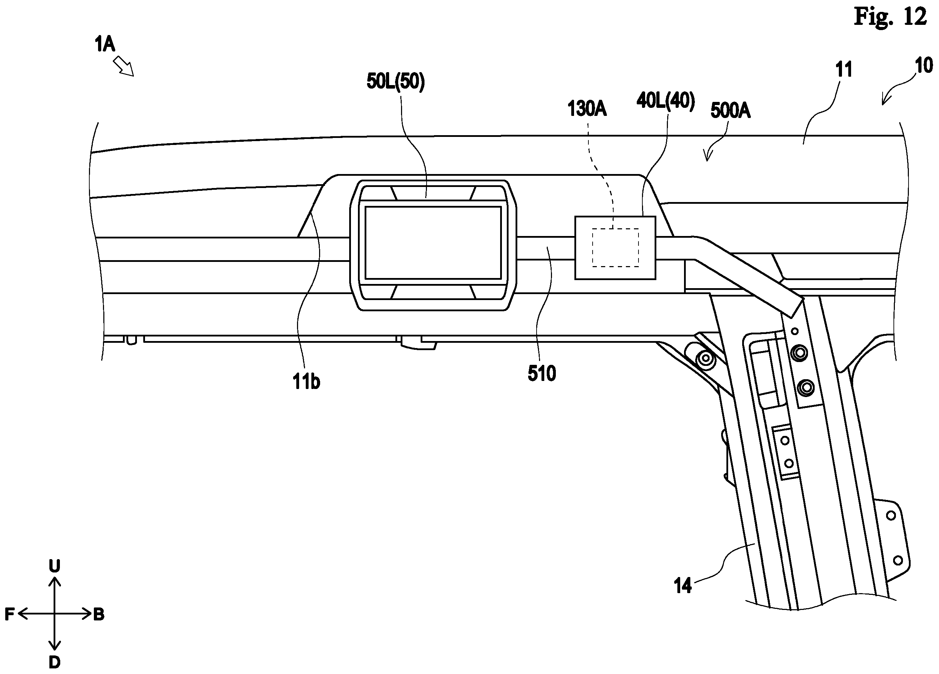

The tractor 1 according to the first embodiment of the present disclosure has been described above. Here, attachment modes of the camera 40 (camera support unit 100) and the radar unit 50 (radar support unit 200) are not limited to the above-described examples, and various attachment modes can be adopted. Another embodiment (second to fifth embodiments) will be described below with reference to Figs. 12 to 15. Hereinafter, configurations different from those of the first embodiment will be described, and description of configurations similar to those of the first embodiment will be omitted as appropriate.

First, a tractor 1A according to a second embodiment will be described with reference to Fig. 12. The tractor 1A differs from the tractor according to the first embodiment in a configuration of a side support member 500A. In the side support member 500A, the rear end of the side support bracket 510 is fixed not to the rear support bracket 410 but to the upper end of the center pillar 14. That is, in the second embodiment, the rear support bracket 410 does not extend to the rear side (the rear support bracket 410 side) of the vehicle body but extends to the center side in the front-rear direction of the vehicle body. With the above configuration, the rear support bracket 410 can be formed in a relatively short shape, and deflection of the rear support bracket 410 can be suppressed.

Further, in the present embodiment, the left side camera 40L and the right side camera 40R are attached to the side support bracket 510 via the side camera support unit 130A. Note that Fig. 12 schematically illustrates the side camera support unit 130A. As the configuration of the side camera support unit 130A, for example, various configurations that can be attached to a round bar-shaped attachment target, such as a rear camera support unit 120 illustrated in Fig. 7, can be adopted.

Further, in the present embodiment, the recess 11b of the roof 11 is enlarged so as to extend in the front-rear direction, and both the left side camera 40L (right side camera 40R) and the left side radar unit 50L (right side radar unit 50R) are located in the recess 11b. With the above configuration, the radar unit 50 disposed on the side of the roof 11 can be made inconspicuous. Further, with the above configuration, the camera 40 and the radar unit 50 can be protected from the flying of rain or dust and the contact of branch trees.

Further, in the present embodiment, the upper surface of the left side radar unit 50L (right side radar unit 50R) is disposed below the top portion of the roof 11. With the above configuration, the tractor 1 can be made compact in the vertical direction, and the tractor 1 can be easily stored and transported in a garage or the like.

Note that, in the example described above, the left side camera 40L (right side camera 40R) attached to the side support bracket 510 using the side camera support unit 130A is positioned in the recess 11b. However, a configuration can be adopted in which the left side camera 40L (right side camera 40R) attached to the center pillar 14 using the side camera support unit 130 illustrated in Figs. 4 and 8 is positioned in the recess 11b.

Further, in the above example, the camera 40 and radar unit 50 are disposed adjacent to each other in the common recess 11b. However, it is not limited to such an aspect. For example, it is also possible to adopt a configuration in which a plurality of recesses 11b corresponding to each of the camera 40 and the radar unit 50 is formed, and the camera 40 and the radar unit 50 are independently disposed in each recess 11b. In addition, a configuration in which only one of the camera 40 and the radar unit 50 (for example, only the radar unit 50) is disposed in the recess 11b or a configuration in which both the camera 40 and the radar unit 50 are not disposed in the recess 11b can also be adopted.

Next, a tractor 1B according to a third embodiment will be described with reference to Fig. 13. The tractor 1B differs from the tractor according to the first embodiment in a configuration of a front radar support unit 210A. The front radar support unit 210A supports the front radar unit 50F so as to be located in the unit cover 340. Note that Fig. 13 schematically illustrates the front radar support unit 210A.

In the present embodiment, the front radar support unit 210A is attached to the upper surface of the support plate 330. As a configuration of the front radar support unit 210A, for example, various configurations that can be attached to a plate-shaped attachment target, such as a front camera support unit 110 illustrated in Fig. 6, can be adopted.

Further, in the present embodiment, as illustrated in Fig. 13(a), the front surface (the surface that emits radio waves) of the front radar unit 50F is disposed along a surface (inclined surface) of side walls of the unit cover 340 that is inclined to face diagonally forward. Further, in the present embodiment, as illustrated in Fig. 13(b), an opening 341 through which the front radar unit 50F can be exposed is formed in a side wall of the unit cover 340 constituting the inclined surface.

According to the present embodiment, the front radar unit 50F can be disposed on a relatively front side. As a result, it is possible to suppress the members in front of the roof 11 (for example, the muffler 4a, the work lamp, and the like) from being positioned in the detection range of the front radar unit 50F. Here, the inclined surface of the unit cover 340 is formed so as not to be positioned within the angle of view of the camera 40 indicated by a two-dot chain line in Fig. 13(a). By disposing the front radar unit 50F along the inclined surface, it is possible to prevent the front radar unit 50F from being positioned within the angle of view of the camera 40 while disposing the front radar unit 50F on the front side (in the vicinity of the front camera 40F). Further, with the above configuration, covering the front radar unit 50F with the unit cover 340 makes the front radar unit 50F inconspicuous. Further, with the above configuration, the front radar unit 50F can be protected from rain, dust flying, and branch tree contact.

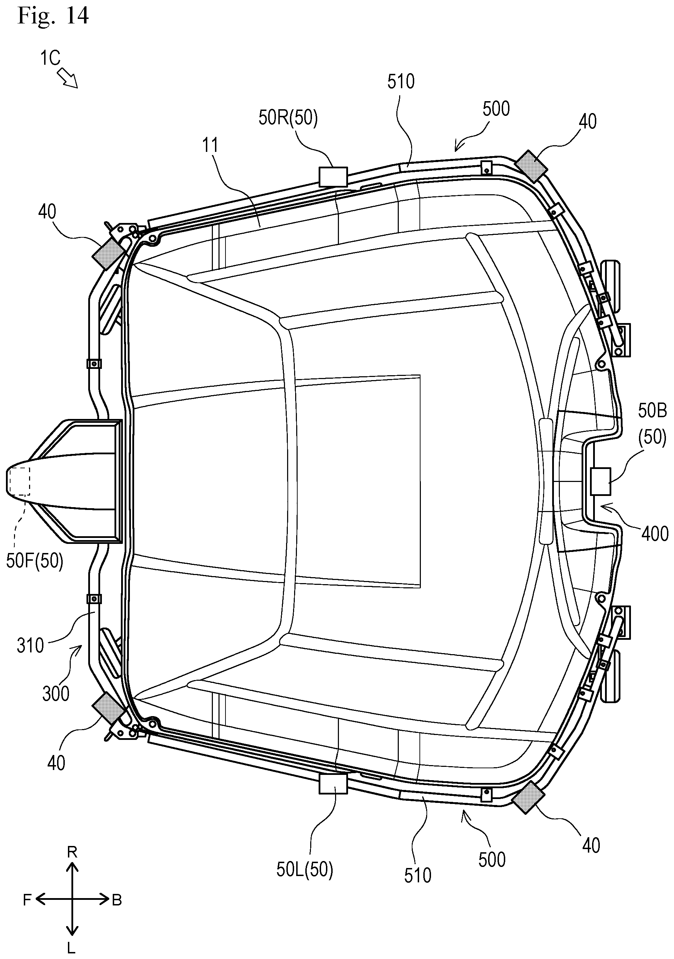

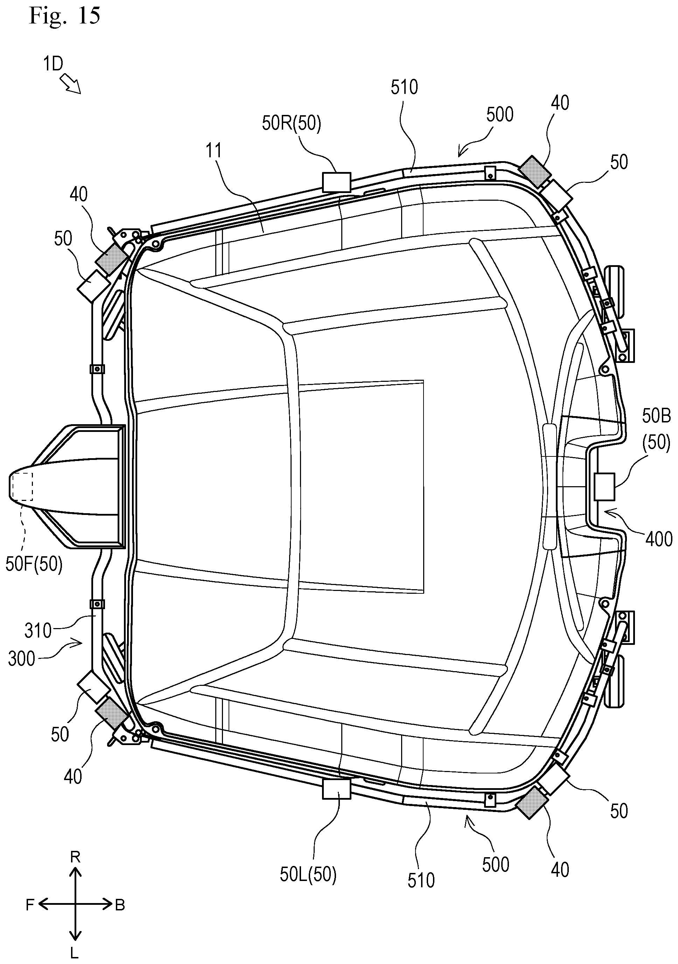

Next, other embodiments (fourth and fifth Embodiments) in which the arrangement of each camera 40 and each radar unit 50 is changed will be described with reference to Figs. 14 and 15. Note that, in Figs. 14 and 15, the camera 40 and the radar unit 50 are schematically illustrated, and the camera 40 is painted out. Further, in each drawing, illustration of the camera support unit 100 and the radar support unit 200 is omitted. First, a tractor 1C according to a fourth embodiment will be described with reference to Fig. 14.

In the tractor 1C, one radar unit 50 is disposed on each of four sides (front, rear, left, and right) in a plan view of the roof 11. Each radar unit 50 is disposed substantially at the center of the four sides of the roof 11 in plan view. In the present embodiment, the front radar unit 50F is disposed at substantially the center in the left-right direction of the front support member (the position where the front camera 40F is disposed in the first embodiment). Note that the radar units 50 other than the front radar unit 50F are disposed in the same manner as in the first embodiment.

Further, in the present embodiment, one camera 40 is disposed at each of the four corners of the roof 11 in plan view. Each camera 40 is attached to a support member (front support member 300, rear support member 400, and side support member 500) surrounding the periphery of the roof 11. Specifically, among the cameras 40, the cameras 40 disposed at the front corners (the right front corner and the left front corner) are attached to both ends of the front support bracket 310 of the front support member 300 in the left-right direction. Further, the cameras 40 disposed at the rear corners (the right rear corner and the left rear corner) are attached to portions of the side support bracket 510 of the side support member 500 located at the right rear corner and the left rear corner of the roof 11. Each of the cameras 40 is attached to each bracket using, for example, the rear camera support unit 120 illustrated in Fig. 7.

Note that the support member serving as the attachment target of each of the cameras 40 at the four corners is not limited to the above-described example. For example, the camera 40 disposed at the front corner may be attached to the front portion of the side support bracket 510. In addition, the camera 40 disposed at the rear corner may be attached to both ends of the rear support member 400 in the left-right direction.

When the cameras 40 and the radar units 50 are disposed as described above, the cameras 40 and the radar units 50 are separated from each other, so that the cameras 40 and the radar units 50 can be prevented from being located in the imaging range and the detection range of each other. Further, with the above configuration, it is possible to relatively reduce the number of cameras 40 and radar units 50 while enabling imaging and detection of substantially the entire circumference (front, rear, left, and right) of the vehicle body.

Note that, in the above example, the installation positions of the cameras 40 and the radar units 50 can be reversed. That is, the cameras 40 can be disposed on four sides of the roof 11 in plan view, and the radar units 50 can be disposed at four corners of the roof 11 in plan view.

Next, a tractor 1D according to a fifth embodiment will be described with reference to Fig. 15. In the tractor 1D, in addition to the arrangement mode of the tractor 1C illustrated in Fig. 14, the radar unit 50 is disposed at each of the four corners of the roof 11 in a plan view. That is, in the present embodiment, the cameras 40 and the radar units 50 are disposed at four corners of the roof 11 in a plan view.

The radar units 50 at the four corners are attached to attachment targets (respective brackets of the front support member 300 and the side support member 500) substantially similar to the cameras 40 at the four corners, for example, by using the front radar support unit 210 illustrated in Fig. 9, the side radar support unit 230 illustrated in Fig. 5, and the like. The cameras 40 and the radar units 50 at the four corners are disposed adjacent to each other. The radar unit 50 can be disposed on the center side of the tractor 1 with respect to the cameras 40 so as not to be positioned within the angle of view of the adjacent cameras 40. With the configuration of the present embodiment, by increasing the number of radar units 50, blind spots in the detection range of radar units 50 can be reduced.

As described above, the tractors 1 to 1D (working vehicle) according to the present embodiment include:
the cabin 10 having the roof 11; and
at least one radar unit 50 (detection unit) disposed at the height of the roof 11 and capable of detecting a detection target around the vehicle body.
With such a configuration, it is possible to suitably detect a detection target. That is, unlike a case where the radar unit 50 is disposed at a relatively low position (for example, the height of the hood 4), detection of an unintended object such as vegetation can be suppressed.

Further, the radar unit 50
includes a front radar unit 50F (front detection unit) capable of detecting the front of the vehicle body.

With such a configuration, it is possible to suitably detect a detection target in front of the vehicle body.

Further, the radar unit 50
includes a rear radar unit 50B (rear detection unit) capable of detecting the rear of the vehicle body.

With such a configuration, it is possible to suitably detect a detection target behind the vehicle body.

Further, the radar unit 50
includes a side detection unit (left side radar unit 50L or right side radar unit 50R) capable of detecting at least one of a left side or a right side of the vehicle body.

With such a configuration, it is possible to suitably detect a detection target on the left side or the right side of the vehicle body.

Further, a plurality of the radar units 50 is provided.

With such a configuration, it is possible to suitably perform detection in a plurality of directions.

In addition, the tractors 1 to 1D include:
a plurality of cameras 40 (imaging units) disposed at the height of the roof 11 and capable of imaging the surroundings of the vehicle body.

With such a configuration, it is possible to suitably perform imaging using the camera 40. That is, unlike a case where the camera 40 is disposed at a relatively low position, it is possible to suppress imaging of an unintended target.

In addition, the tractors 1 to 1D include:
a support member (front support member 300, rear support member 400, and side support member 500) that is disposed on the outer periphery of the roof 11 and is capable of supporting the radar unit 50 and the camera 40.

With such a configuration, the plurality of radar units 50 and the plurality of cameras 40 can be disposed on the outer periphery of the roof 11 using the support member (front support member 300, rear support member 400, and side support member 500).

Further, the roof 11 has a top portion, and
the radar unit 50 is disposed such that an upper surface of radar unit 50 is positioned below the top portion.

With such a configuration, the tractor 1 can be made compact in the vertical direction, and the tractor 1 can be easily stored and transported in a garage or the like.

Further, the detection unit
is a radar unit 50 capable of detecting the detection target by emitting a radio wave,
the support member
includes the front support member 300 disposed in front of the roof 11, and
the front support member 300
supports the radar unit 50 and the camera 40.

With such a configuration, it is possible to suitably perform detection and imaging using radio waves in front of the vehicle body.

Further, the tractors 1 to 1D include:
a position detection device 30 capable of detecting the position of the vehicle body and supported by the front support member 300, in which
the radar unit 50
is disposed such that an upper surface of the radar unit is positioned below the position detection device 30.

With such a configuration, the tractor 1 can be made compact in the vertical direction, and the tractor 1 can be easily stored and transported in a garage or the like.

Further, the support member
includes the side support member 500 disposed on a side of the roof 11, and
includes the fixing unit 520 (connecting portion) that connects the front support member 300 and the side support member 500 to each other.

With such a configuration, members capable of supporting the radar unit 50 and the camera 40 to the front and the side of the vehicle body can be suitably connected to each other.

Further, an outer peripheral portion (side) of the roof 11 is formed with the recess 11b that is recessed toward a center side of the roof 11 in a plan view, and
the plurality of radar units 50 and the plurality of cameras 40 include
the radar units 50 (left side radar unit 50L, right side radar unit 50R) and the cameras 40 (left side camera 40L, right side camera 40R) disposed adjacent to each other so as to be positioned inside the recess 11b.

With such a configuration, the radar unit 50 and the camera 40 disposed on the outer peripheral portion of the roof 11 can be made inconspicuous.

In addition, the support member (front support member 300)
includes a unit cover 340 (cover portion) that covers the radar unit 50 (front radar unit 50F) and the camera 40 (front camera 40F) from above,
the unit cover 340
includes a side wall formed so as not to be positioned within an angle of view of the front camera 40F, and
the front radar unit 50F covered by the unit cover 340 is disposed along the side wall.

With such a configuration, it is possible to prevent the front radar unit 50F from being positioned within the angle of view of the camera 40 while disposing the front radar unit 50F in the vicinity (front side) of the front camera 40F.

Further, one of the plurality of radar units 50 and the plurality of cameras 40
is disposed at least on each of four sides in a plan view of the roof 11 so as to enable detection or imaging in forward, rearward, and both left and right directions from the vehicle body, and
another of the plurality of radar units 50 and the plurality of cameras 40
is disposed at least at each of four corners in a plan view of the roof 11 so as to enable detection or imaging in forward, rearward, and both left and right directions from the vehicle body.

With such a configuration, the plurality of radar units 50 and the plurality of cameras 40 can be disposed at positions where the radar units and the cameras can be prevented from being located in the imaging range and the detection range.

Further, one of the plurality of radar units 50 and the plurality of cameras 40 is disposed on both four sides and four corners of the roof 11 in a plan view.

With such a configuration, blind spots in the detection range of radar unit 50 or the imaging range of camera 40 can be reduced.

Note that the tractor 1 according to the present embodiment is an embodiment of the working vehicle according to the present invention.

Further, the camera 40 according to the present embodiment is an embodiment of an imaging unit according to the present invention.

Further, the front radar unit 50F according to the present embodiment is an embodiment of the front detection unit according to the present invention.

Further, the rear radar unit 50B according to the present embodiment is an embodiment of the rear detection unit according to the present invention.

Further, the left side radar unit 50L and the right side radar unit 50R according to the present embodiment are embodiments of the side detection unit according to the present invention.

Further, the radar unit 50 according to the present embodiment is an embodiment of the detection unit according to the present invention.

Further, the front support member 300, the rear support member 400, and the side support member 500 according to the present embodiment are embodiments of the support member according to the present invention.

Further, the unit cover 340 according to the present embodiment is an embodiment of the cover portion according to the present invention.

Further, the fixing unit 520 according to the present embodiment is an embodiment of the coupling portion according to the present invention.

Although the embodiments of the present invention have been described above, the present invention is not limited to the above configuration, and various modifications can be made within the scope of the invention described in the claims.

Specifically, the arrangement of the camera 40 and the radar unit 50 is not limited to the example described in each of the above embodiments (first to fifth embodiments). For example, in the fifth embodiment illustrated in Fig. 15, any one of the radar units 50 disposed on four sides (front, rear, left, and right) in a plan view of the roof 11 may be reduced.

Further, in each of the above embodiments, the plurality of cameras 40 and the plurality of radar units 50 are provided so that the entire circumference (front, rear, left, and right) of the vehicle body can be imaged and detected. However, it is not limited to such an aspect. For example, at least one camera 40 and radar unit 50 may be provided so as to be able to capture and detect any one of the front, rear, left, and right of the vehicle body.

Further, the arrangement and number of the cameras 40 and the radar units 50 are not limited to the specific positions and numbers described in the above embodiments. As for the arrangement and number of the cameras 40 and the radar units 50, the positions of the cameras 40 and the radar units 50 described in each embodiment can be appropriately changed or the number can be appropriately set (increased or decreased) according to the content of the automatic control of the tractor 1, in addition to the above-described example.

Further, the orientations (angles in the horizontal direction and the vertical direction) of the camera 40 and the radar unit 50 are not limited to the examples described in the above embodiments. For example, in the third embodiment illustrated in Fig. 13, the front surface of the front radar unit 50F is disposed obliquely forward along the inclined surface of the unit cover 340. However, a configuration in which the front surface of the front radar unit 50F is disposed to face the front (forward) can also be adopted. In addition, various orientations can be set as the orientation of each camera 40 and each radar unit 50 from the viewpoint of suitably imaging and detecting the periphery of the vehicle body.

Further, the height position of each radar unit 50 is not limited to the example described in each of the above embodiments. For example, at least one of the plurality of radar units 50 may be disposed at the height position of the roof 11, and the other radar units 50 may be disposed outside the height position of the roof 11 and below the roof 11 (the upper surface of each radar unit 50 is positioned below the lowest portion of the roof 11). In addition, the other radar unit 50 may be disposed outside the range of the height position of the roof 11 and above the roof 11 (the lower surface of each radar unit 50 is positioned above the top portion of the roof 11).

Further, the height position of each camera 40 is not limited to the example described in each of the above embodiments. For example, at least one of the cameras 40 may be disposed so as to be located outside the range of the height position of the roof 11 and below the roof 11 (the upper surface of the camera 40 is positioned below the lowest portion of the roof 11) or above the roof 11 (the lower surface of the camera 40 is positioned above the top portion of the roof 11).

Further, in each of the above embodiments, an example has been described in which the cabin 10 includes the front pillar 12, the rear pillar 13, and the center pillar 14 (six-pillar type). However, the present invention is not limited to this. As the cabin 10, for example, various configurations such as a configuration not including the center pillar 14 (four-pillar type) can be adopted.

Further, the configurations of the camera support unit 100 and the radar support unit 200 described in the above embodiments are merely examples, and the members for disposing the cameras 40 and the radar units 50 around the roof 11 are not limited to the above examples, and various members can be adopted.

Further, the configuration of the support member (front support member 300, rear support member 400, and side support member 500) described in each of the above embodiments is an example, and the attachment target of the camera support unit 100 and the radar support unit 200 is not limited to the above example, and various members can be adopted.

Further, in each of the above embodiments, the radar unit 50 that performs detection using radio waves is employed as the detection unit. However, it is not limited to such an aspect. As the detection unit, for example, various devices capable of detecting a detection target around the vehicle body, such as an ultrasonic sensor, can be adopted.

In addition, the shape, structure, and the like of each unit exemplified in the above embodiment are merely examples, and the configuration of each unit can be arbitrarily changed.

Further, in the above embodiment, the tractor 1 has been exemplified as the working vehicle. However, it is not limited to such an aspect. For example, the working vehicle may be another agricultural vehicle, a construction vehicle, an industrial vehicle, or the like.

### INDUSTRIAL APPLICABILITY

The present invention can be applied to a working vehicle.

### REFERENCE SIGNS LIST

1: Tractor
40: Camera
50: Radar unit
100: Camera support unit
200: Radar support unit
300: Front support member
400: Rear support member
500: Side support member

## Claims

1. A working vehicle comprising:
a cabin having a roof; and
at least one detection unit disposed at a height of the roof and capable of detecting a detection target around a vehicle body.

2. The working vehicle according to claim 1, wherein
the detection unit
includes a front detection unit capable of detecting a front of the vehicle body.

3. The working vehicle according to claim 1, wherein
the detection unit
includes a rear detection unit capable of detecting a rear of the vehicle body.

4. The working vehicle according to claim 1, wherein
the detection unit
includes a side detection unit capable of detecting at least one of a left side or a right side of the vehicle body.

5. The working vehicle according to any one of claims 1 to 4, wherein
a plurality of the detection units is provided.

6. The working vehicle according to claim 5, further comprising:
a plurality of imaging units disposed at a height of the roof and capable of imaging surroundings of the vehicle body.

7. The working vehicle according to claim 6, further comprising:
a support member disposed on an outer periphery of the roof and capable of supporting the detection unit and the imaging unit.

8. The working vehicle according to claim 1, wherein
the roof includes a top portion, and
the detection unit is disposed such that an upper surface of the detection unit is positioned below the top portion.

9. The working vehicle according to claim 7, wherein
the detection unit
is a radar unit capable of detecting the detection target by emitting a radio wave,
the support member
includes a front support member disposed in front of the roof, and the front support member
supports the radar unit and the imaging unit.

10. The working vehicle according to claim 9, further comprising:
a position detection device capable of detecting a position of the vehicle body and supported by the front support member, wherein
the radar unit
is disposed such that an upper surface of the radar unit is positioned below the position detection device.

11. The working vehicle according to claim 9, wherein
the support member
includes a side support member disposed on a side of the roof, and
includes a connecting portion that connects the front support member and the side support member to each other.

12. The working vehicle according to claim 6, wherein
an outer peripheral portion of the roof is formed with a recess that is recessed toward a center side of the roof in a plan view, and
the plurality of detection units and the plurality of imaging units include
the detection unit and the imaging unit disposed adjacent to each other so as to be located inside the recess.

13. The working vehicle according to claim 7, wherein
the support member
includes a cover portion that covers the detection unit and the imaging unit from above,
the cover portion
includes a side wall formed so as not to be positioned within an angle of view of the imaging unit, and
the detection unit covered by the cover portion is disposed along the side wall.

14. The working vehicle according to claim 6, wherein
one of a plurality of the detection units and a plurality of the imaging units
is disposed at least on each of four sides in a plan view of the roof so as to enable detection or imaging in forward, rearward, and both left and right directions from the vehicle body, and
another of the plurality of the detection units and the plurality of the imaging units
is disposed at least on each of four corners in a plan view of the roof so as to enable detection or imaging in forward, rearward, and both left and right directions from the vehicle body.

15. The working vehicle according to claim 14, wherein
one of the plurality of detection units and the plurality of imaging units
is disposed on both four sides and four corners of the roof in a plan view.
